# EUROPÄISCHE PATENTSCHRIFT

(11) **EP 0 738 455 B1**
(45) Veröffentlichungstag und Bekanntmachung des Hinweises auf die Patenterteilung: **31.05.2000**
(21) Anmeldenummer: 95934048.0
(22) Anmeldetag: 11.10.1995
(51) Int. Cl.: H05B 41/392, H05B 41/38, H05B 41/295

(54) **VORRICHTUNG ZUM BETREIBEN EINER GASENTLADUNGSLAMPE**
DEVICE FOR OPERATING A GAS DISCHARGE LAMP
DISPOSITIF SERVANT AU FONCTIONNEMENT D'UNE LAMPE A DECHARGE

(30) Priorität: 08.11.1994 DE 4439812
(43) Veröffentlichungstag der Anmeldung: 23.10.1996
(73) Patentinhaber: ROBERT BOSCH GMBH, 70442 Stuttgart (DE)
(72) Erfinder: KERN, Robert, D-77887 Sasbachwalden (DE)
(86) Internationale Anmeldenummer: DE9501394
(87) Internationale Veröffentlichungsnummer: WO9614725

(56) Entgegenhaltungen:
- EP-A- 0 306 086
- EP-A- 0 439 864
- DE-A- 4 332 059

## Beschreibung

### Stand der Technik

Die Erfindung geht aus von einer Vorrichtung zum Betreiben einer Gasentladungslampe nach der Gattung des Hauptanspruchs. Aus der DE-A 41 36 486 ist eine Schaltungsanordnung zum Betreiben einer Gasentladungslampe bekannt, die einen Spannungswandler enthält, der die von einer Gleichstromquelle zur Verfügung gestellte Energie in eine Wechselspannung geeigneter Höhe und Frequenz umsetzt. Der Spannungswandler enthält einen DC/DC-Wandler und eine nachgeschaltete Brückenschaltung, in deren Diagonale die Gasentladungslampe angeordnet ist. Der DC/DC-Wandler erhöht die von einer als Batterie ausgestalteten Gleichstromquelle bereitgestellte Spannung auf einen Wert, der zum Betreiben der Gasentladungslampe ausreicht. Die Brückenschaltung arbeitet als Wechselrichter und formt die Gleichspannung in eine entsprechende Wechselspannung um. Die vorbekannte Schaltungsanordnung sieht vor, daß die Brückenschaltung unmittelbar nach dem Zünden der Gasentladungslampe noch nicht als Wechselrichter arbeitet und daher die Gasentladungslampe mit der vom DC/DC-Wandler erzeugten Gleichspannung beaufschlagt. In Abhängigkeit von einem Signal einer Statusbestimmungseinrichtung, die ein Signal abgibt, wenn die Gasentladungslampe erfolgreich gezündet hat, und in Abhängigkeit von der von einer Verzögerungseinrichtung vorgegebenen Zeit wird der Wechselrichter derart gesteuert, daß die Gasentladungslampe mit der vorgesehenen Wechselspannung beaufschlagt wird. Mit der vorbekannten Maßnahme wird das früher beobachtete Erlöschen der Gasentladungslampe unmittelbar nach der Zündung während der ersten Nulldurchgänge des Lampenwechselstroms verhindert.

Im nachfolgenden Betrieb mit der Wechselspannung tritt während jedes Umpolvorgangs eine momentane Leistungsreduzierung in der Gasentladungslampe auf, die auch in diesem Betriebszustand zu einer kurzzeitigen Reduzierung des Lichtbogens führen kann. Eine ausreichend hohe Betriebsfrequenz, die beispielsweise bei einigen hundert Hertz liegen kann, stellt sicher, daß der Lichtbogen während des kurzen Stromnulldurchgangs nicht vollständig erlischt. Die notwendige Spannung nach dem Umpolvorgang zum Aufrechterhalten des Lichtbogens im Nennbetrieb entspricht der normalen Brennspannung der Gasentladungslampe. Eine Reduzierung der der Gasentladungslampe zugeführten elektrischen Leistung führt dazu, daß bei dem Umpolvorgang ein vollständiges Abreißen des Lichtbogens auftritt. Die Energieversorgungsschaltung muß daher in der Lage sein, die erforderliche Wiederzündspannung nach dem Umpolvorgang aufzubringen. Eine Reduzierung der der Gasentladungslampe zugeführten elektrischen Leistung ist deshalb in dem Maße möglich, wie die Energieversorgungsschaltung in der Lage ist, die Wiederzündspannung aufzubringen.

Der Erfindung liegt die Aufgabe zugrunde, eine Vorrichtung zum Betreiben einer Gasentladungslampe anzugeben, die ein sicheres Betreiben der Gasentladungslampe in einer Betriebsphase mit reduzierter Leistung sicherstellt.

Die Aufgabe wird durch die im Hauptanspruch angegebenen Merkmale gelöst.

### Vorteile der Erfindung

Die erfindungsgemäße Vorrichtung weist den Vorteil auf, daß eine Erhöhung der Ausgangsspannung einer vorhandenen Energieversorgungsschaltung zum Erreichen einer höheren Wiederzündspannung nicht erforderlich ist. Erfindungsgemäß ist vorgesehen, daß bei einer Reduzierung der mittleren Lampenleistung gegenüber dem Nennbetrieb eine Verlängerung der Periodendauer der Lampenwechselspannung oder des Lampenwechselstroms vorgesehen ist. Die Reduzierung der Wiederzündspannung durch Absenkung der Betriebsfrequenz könnte darauf beruhen, daß eine stärkere Erwärmung der Lampenelektroden auftritt, die zu einer erhöhten Elektronenemission führt.

Vorteilhafte Weiterbildungen und Ausgestaltungen der erfindungsgemäßen Vorrichtung ergeben sich aus abhängigen Ansprüchen.

Eine vorteilhafte Ausgestaltung sieht vor, daß die Verlängerung der Periodendauer für jede halbe Periode durchgeführt wird. Diese Maßnahme führt zu einer besonders einfachen Realisierung der erfindungsgemäßen Vorrichtung, da lediglich die Betriebsfrequenz der Lampe zu reduzieren ist. Eine Änderung eines gegebenenfalls vorgegebenen Tastverhältnisses bei einer angenommenen Rechteckspannung braucht nicht vorgenommen zu werden.

Eine andere vorteilhafte Ausgestaltung sieht vor, daß der Betrag der Verlängerung der Periodendauer abhängig ist von dem Betrag der vorgesehenen Leistungsreduzierung.

Eine vorteilhafte Weiterbildung betrifft die Energieversorgungsschaltung, die vorzugsweise einen DC/DC-Wandler enthält, der an seinem Ausgang eine Gleichspannung bereitstellt, die in einer nachfolgenden Brückenschaltung, in deren Diagonale die Gasentladungslampe liegt, in eine Wechselspannung umgewandelt wird.

Eine Ausgestaltung dieser Weiterbildung sieht vor, daß der DC/DC-Wandler von einer Batterie gespeist ist.

Die erfindungsgemäß vorgesehenen Weiterbildungen der Energieversorgungsschaltung ermöglichen die Realisierung eines hocheffizienten DC/DC-Wandlers, der intern eine wesentlich höhere Taktfrequenz aufweisen kann als die Wechselspannung, mit der die Gasentladungslampe beaufschlagt wird. Die vergleichsweise niederfrequente Wechselspannung mit einer Frequenz von beispielsweise einigen hundert Hertz wird durch entsprechendes Ansteuern der Brückenschaltung erzeugt.

Die erfindungsgemäße Vorrichtung ist insbesondere geeignet zum Betreiben einer metalldotierten Hochdruckgasentladungslampe, die hinsichtlich des Bedarfs einer Wiederzündspannung nach dem unerwünschten Erlöschen des Lichtbogens kritisch ist. Eine bevorzugte Verwendung der Hochdruckgasentladungslampe, insbesondere der metalldotierten Hochdruckgasentladungslampe, ist in einem Scheinwerfer eines Kraftfahrzeugs gegeben.

Weitere vorteilhafte Weiterbildungen und Ausgestaltungen der erfindungsgemäßen Vorrichtung zum Betreiben einer Gasentladungslampe ergeben sich aus weiteren abhängigen Ansprüchen und aus der folgenden Beschreibung.

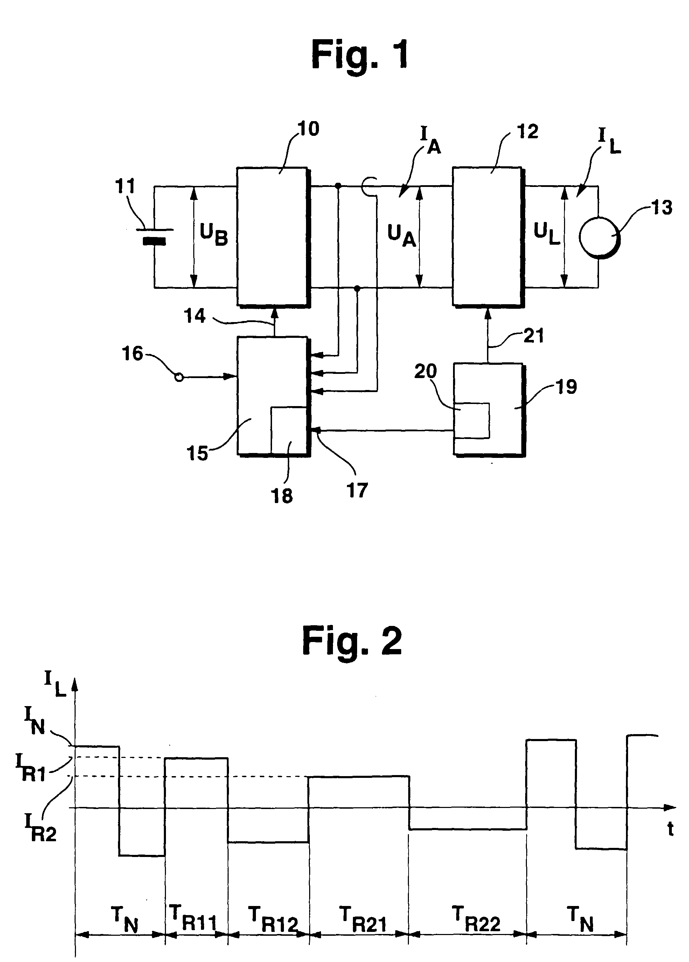

Figur 1 zeigt ein Blockschaltbild einer erfindungsgemäßen Vorrichtung, und Figur 2 zeigt einen im Blockschaltbild gemäß Figur 1 auftretenden Signalverlauf in Abhängigkeit von der Zeit.

Figur 1 zeigt einen Spannungswandler 10, der eine von einer Energiequelle 11, welche eine Spannung U_{B} aufweist, bezogene elektrische Leistung in eine entsprechende ausgangsseitige Leistung mit einer vorgegebenen Ausgangsspannung U_{A} oder einem vorgegebenen Ausgangsstrom I_{A} umsetzt. Die Ausgangsspannung U_{A} wird einer Brückenschaltung 12 zugeführt, an deren Ausgang eine Lampenspannung U_{L} auftritt, die zur Speisung einer Gasentladungslampe 13 vorgesehen ist. Ein durch die Gasentladungslampe 13 fließender Lampenstrom ist mit I_{L} bezeichnet.

Der Spannungswandler 10 erhält ein Steuersignal 14 zugeleitet, das von einer Leistungsvorgabeanordnung 15 bereitgestellt wird. Die Leistungsvorgabeanordnung 15 ermittelt das Steuersignal 14 in Abhängigkeit von einer Leistungsvorgabe 16, dem erfaßten Ausgangsstrom I_{A} und der erfaßten Ausgangsspannung U_{A}. Die Leistungsvorgabeanordnung 15 gibt ein Leistungsreduziersignal 17 an eine Schaltsignalerzeugung 18 ab, die ein Schaltsignal 19 für die Brückenschaltung 12 bereitstellt.

Figur 2 zeigt den Lampenstrom I_{L} in Abhängigkeit von der Zeit t. Der Lampenstrom I_{L} weist einen wenigstens näherungsweise rechteckförmigen Signalverlauf auf, wobei im Nennbetrieb die Periodendauer auf T_{N} festgelegt ist. Neben dem Nennbetrieb gibt es einen leistungsreduzierten Betrieb, bei dem ein reduzierter Lampenstrom I_{R} vorgesehen ist. In Figur 2 sind zwei diskrete Stromniveaus I_{R1}, I_{R2} eingetragen, die während des leistungsreduzierten Betriebs auftreten. Der Betrieb mit der reduzierten Leistung tritt während der Periodendauern auf, die nicht mit T_{N} bezeichnet sind. Ein leistungsreduzierter Betrieb tritt demnach bei den eingetragenen halben Periodendauern T_{R11}, T_{R12}, T_{R21}, T_{R22} auf.

Die in Figur 1 gezeigte Vorrichtung wird anhand des in Figur 2 gezeigten Verlaufs des Lampenstroms I_{L} in Abhängigkeit von der Zeit t näher erläutert:

Der Spannungswandler 10, die Brückenschaltung 12 sowie die Leistungsvorgabeanordnung 15 und die Schaltsignalerzeugung 19 bilden zusammen eine Energieversorgungsschaltung für die Gasentladungslampe 13. Der Spannungswandler 10, der vorzugsweise als DC/DC-Wandler realisiert ist, setzt die von der Energiequelle 11, vorzugsweise eine Batterie, bezogene Leistung in eine vorgegebene Ausgangsspannung U_{A} und/oder einen vorgegebenen Ausgangsstrom I_{A} um. Die Spannung der Energiequelle 11 ist im Falle einer Batterie mit U_{B} vorgegeben. Der Spannungswandler 10 setzt die im allgemeinen niedrige Spannung U_{B} der Energiequelle 11 in eine im allgemeinen höhere Ausgangsspannung U_{A} um. Die Ausgestaltung des Spannungswandlers 10 als DC/DC-Wandler weist den wesentlichen Vorteil auf, daß ein hocheffizientes Umsetzen der Spannung erfolgen kann, wobei die Taktfrequenz des DC/DC-Wandlers unabhängig von anderen Signalfrequenzen der Energieversorgungsschaltung festgelegt werden kann.

Die nachgeschaltete Brückenschaltung 12 hat die Aufgabe, die Gleichspannung U_{A} in eine zur Speisung der Gasentladungslampe 13 geeignete Lampenspannung U_{L} umzusetzen. Geeignet ist eine Wechselspannung, die Materialtransporteffekte in der Gasentladungslampe 13 sowie eine ungleichmäßige Elektrodenabnutzung vermeidet. Die Brückenschaltung 12 enthält beispielsweise vier Halbleiter-Leistungselemente, die als H-Brücke verschaltet sind, in deren Diagonale die Gasentladungslampe 13 angeordnet ist. Die Brückenschaltung 13 wird mit dem Schaltsignal 19 derart geschaltet, daß die Ausgangsspannung U_{A} des Spannungswandlers 10 in der Polarität abwechselnd an die beiden Elektroden der Gasentladungslampe 13 gelegt wird. Die Frequenz bestimmt das Schaltsignal 19, die beispielsweise bei einigen hundert Hertz liegt.

Der Spannungswandler 10 kann entweder die Ausgangsspannung U_{A} oder den Ausgangsstrom I_{A} einer Gasentladungslampe 13 als Last einprägen. Die jeweils andere Größe ist durch den Innenwiderstand der Gasentladungslampe 13 festgelegt. Vorzugsweise wird der Ausgangsstrom I_{A} eingeprägt, da die Gasentladungslampe 13 auf bestimmte Ströme ausgelegt ist. Der Ausgangsstom I_{A} entspricht dem Lampenstrom I_{L} dem Betrag nach. Ebenso entsprechen sich die Ausgangsspannung U_{A} und die Lampenspannung U_{L} dem Betrag nach.

Zur Vorgabe einer bestimmten Leistung ist die Leistungsvorgabeanordnung 15 vorgesehen, die ein entsprechendes Steuersignal 14 an den Spannungswandler 10 abgibt. Die Leistungsvorgabeanordnung 15 erhält für die vorzugebende Leistung von der Leistungsvorgabe 16 als Sollwert zugeführt. Der Leistungsistwert wird aus der erfaßten Ausgangsspannung U_{A} und dem erfaßten Ausgangsstrom I_{A} ermittelt. Die erforderlichen Sensoren sind in Figur 1 nicht eingetragen.

Während des Nennbetriebs der Gasentladungslampe 13 liegt die Amplitude des Lampenstroms I_{L} beispielsweise bei dem in Figur 2 eingetragenen Wert des Nennstroms IN. Der Lampenstrom I_{L} weist vorzugsweise wenigstens näherungsweise einen rechteckförmigen Signalverlauf auf, der im Nennbetrieb eine Periodendauer T_{N} aufweist, die vom Schaltsignal 19 vorgegeben ist.

Während des Umpolvorgangs, bei dem der Lampenstrom I_{L} und die Lampenspannung U_{L} einen Nulldurchgang aufweisen, tritt eine mehr oder weniger starke Reduzierung des in der Gasentladungslampe 13 auftretenden Lichtbogens in Abhängigkeit von den vorliegenden Betriebsdaten der Gasentladungslampe 13 auf. Im Extremfall kann ein vollständiges Erlöschen des Lichtbogens nach einem Umpolvorgang auftreten. Im Nennbetrieb der Gasentladungslampe 13, bei dem beispielsweise der Nennstrom I_{N} fließt, tritt im allgemeinen keine nennenswerte Erhöhung der Wiederzündspannung nach dem Umpolvorgang auf. Um ein sicheres Wiederzünden der Lampe nach einem Umpolvorgang auch bei einem Betrieb mit reduzierter Leistung der Gasentladungslampe 13 sicherzustellen, ist erfindungsgemäß eine Verlängerung der Periodendauer der Lampenspannung U_{L} oder des Lampenstroms I_{L} vorgesehen. Experimentell wurde festgestellt, daß die Wiederzündspannung während des Betriebs mit reduzierter Leistung bei einer Verlängerung der Periodendauer gegenüber dem Normalbetrieb nicht oder nur unwesentlich erhöht ist. Das kann darauf beruhen, daß die Elektroden der Gasentladungslampe 13 bei einer längeren Periodendauer eine höhere Temperatur erreichen. Eine höhere Elektrodentemperatur ergibt eine höhere Elektronenemission.

Die Information, daß ein Betrieb mit reduzierter Leistung vorliegt, erhält die Schaltsignalerzeugung 18 über das Leistungsreduziersignal 17 mitgeteilt. Das Leistungsreduziersignal 17 wird in der Leistungsvorgabeanordnung 15 beispielsweise unmittelbar von der Leistungsvorgabe 16 abgeleitet. Bei einer Absenkung der Leistung reduziert die Schaltsignalerzeugung 18 die Periodendauer des Schaltsignals 19. In Figur 2 ist ein erstes Stromniveau I_{R1} gezeigt, das bei einer ersten Leistungsreduzierung auftreten kann. Die Periodendauer während des Betrieb mit dem ersten reduzierten Stromniveau I_{R1} ist in Figur 2 aus der Addition der halben Periodendauern T_{R11}, T_{R12} ermittelbar. Erfindungswesentlich ist, daß die halben Periodendauern T_{R11}, T_{R12} verlängert sind gegenüber der entsprechenden halben Periodendauer T_{N}/2 des Nennbetriebs. Aus Figur 2 ist ersichtlich, daß die halben Periodendauern T_{R11}, T_{R12} nicht notwendigerweise gleich lang sein müssen. Es kann durchaus eine Änderung des Tastverhältnisses gleichzeitig mit der Verlängerung der Periodendauern T_{R11}, T_{R12} erfolgen. Vorzugsweise wird das Tastverhältnis konstant gehalten und lediglich die Periodendauer erhöht, die sich aus der Addition der beiden halben Periodendauern T_{R11}, T_{R12} ergibt. Ein variables Tastverhältnis kann sich in Abhängigkeit von der schaltungstechnischen Realisierung der Schaltsignalerzeugung 18 bei transienten Vorgängen kurzzeitig ergeben, die jeweils bei einer Änderung der Leistung auftreten. In Figur 2 ist noch ein weiteres Stromniveau I_{R2} eingetragen, das bei einer weiteren Leistungsreduzierung auftreten kann. Entsprechend der weiteren Reduzierung der Leistung verlängert sich auch die Periodendauer, die aus der Addition der beiden eingetragenen halben Periodendauern T_{R21}, T_{R22} erhältlich ist. Nach Beendigung der halben Periodendauer T_{R22} wird wieder der Betrieb mit der Nennleistung vorgegeben, der mit dem Nennstrom IN eingeleitet wird. Entsprechend beträgt die Periodendauer wieder den ursprünglichen Wert der Periodendauer T_{N} des Nennbetriebs. Anstelle des in Figur 2 eingetragenen unmittelbareren Übergangs von der reduzierten Leistung auf die höhere Leistung kann ein allmähliches Ansteigen der Leistung mit einer entsprechend allmählichen Verkürzung der Periodendauer vorgesehen sein. Vorzugsweise ist der Betrag der Verlängerung der Periodendauer abhängig von dem Maß der Leistungsreduzierung.

Als Gasentladungslampe 13 ist beispielsweise eine metalldotierte Hochdruckgasentladungslampe vorgesehen. Eine solche Gasentladungslampe eignet sich als Scheinwerferlampe, die beispielsweise in einem Kraftfahrzeug eingesetzt ist.

## Patentansprüche

1. Vorrichtung zum Betreiben einer Gasentladungslampe, mit einer Energieversorgungsschaltung, die eine Wechselspannung oder einen Wechselstrom mit vorgegebener Periodendauer zur Speisung der Gasentladungslampe mit einer vorgegebenen Leistung bereitstellt, dadurch gekennzeichnet, daß bei einer Reduzierung der mittleren Lampenleistung gegenüber dem Nennbetrieb eine Verlängerung der Periodendauer (T_{R11} + T_{R12}, T_{R21} + T_{R22}) der Lampenwechselspannung (U_{L}) oder des Lampenwechselstroms (I_{L}) vorgesehen ist.

2. Vorrichtung nach Anspruch 1, dadurch gekennzeichnet, daß jede halbe Periodendauer (T_{R11}, T_{R12}; T_{R21}, T_{R22}) verlängert ist.

3. Vorrichtung nach Anspruch 1, dadurch gekennzeichnet, daß die Leistungsreduzierung durch Reduzieren des Lampenstroms (I_{L}) vom Nennstrom (I_{N}) auf reduzierte Stromniveaus (I_{R1}, I_{R2}) vorgenommen ist.

4. Vorrichtung nach Anspruch 1, dadurch gekennzeichnet, daß der Betrag der Verlängerung der Periodendauer (T_{R11} + T_{R12}, T_{R21} + T_{R22}) abhängt von dem Betrag der Leistungsreduzierung.

5. Vorrichtung nach Anspruch 1, dadurch gekennzeichnet, daß die Energieversorgungsschaltung einen Spannungswandler (10) mit einem Gleichspannungsausgang und einer nachfolgenden Brückenschaltung (12) enthält, in deren Diagonale die Gasentladungslampe (13) angeordnet ist.

6. Vorrichtung nach Anspruch 5, dadurch gekennzeichnet, daß als Energiequelle (11) eine Batterie vorgesehen ist und daß der Spannungswandler (10) als DC/DC-Wandler ausgestaltet ist.

7. Vorrichtung nach Anspruch 1, dadurch gekennzeichnet, daß als Gasentladungslampe (13) eine metalldotierte Hochdruckgasentladungslampe vorgesehen ist.

8. Vorrichtung nach Anspruch 8, gekennzeichnet durch die Verwendung in einem Kraftfahrzeug.

## Claims

1. Device for operating a gas discharge lamp, having a power supply circuit which provides an AC voltage or an alternating current of prescribed period for feeding the gas discharge lamp with a prescribed power, characterized in that a lengthening of the periods (T_{R11} + T_{R12}, T_{R21} + T_{R22}) of the lamp AC voltage (U_{L}) or of the lamp alternating current (IL) is provided in the case of a reduction in the average lamp power by comparison with the nominal operation.

2. Device according to Claim 1, characterized in that each half period (T_{R11}, T_{R12}; T_{R21}, T_{R22}) is lengthened.

3. Device according to Claim 1, characterized in that the power reduction is undertaken by reducing the lamp current (I_{L}) from the nominal current (I_{N}) to reduced current levels (I_{R1}, I_{R2}).

4. Device according to Claim 1, characterized in that the absolute value of the lengthening of the period (T_{R11} + T_{R12}, T_{R21} + T_{R22}) is a function of the absolute value of the power reduction.

5. Device according to Claim 1, characterized in that the power supply circuit contains a voltage transformer (10) having a DC voltage output and a downstream bridge circuit (12) in the diagonal of which the gas discharge lamp (13) is arranged.

6. Device according to Claim 5, characterized in that a battery is provided as energy source (11), and in that the voltage transformer (10) is configured as a DC-DC converter.

7. Device according to Claim 1, characterized in that a metal-doped high-pressure gas discharge lamp is provided as gas discharge lamp (13).

8. Device according to Claim 7, characterized by its use in a motor vehicle.

## Revendications

1. Dispositif servant au fonctionnement d'une lampe à décharge, avec un circuit d'alimentation en énergie, qui fournit une tension alternative ou une intensité alternative avec une durée de période prédéterminée, pour alimenter la lampe à décharge avec une puissance prédéterminée,
caractérisé en ce qu'
en cas de réduction de la puissance moyenne de la lampe par rapport au fonctionnement nominal, il est prévu un prolongement de la durée de période (T_{R11} + T_{R12}, T_{R21} + TR₂₂) de la tension alternative de lampe (U_{L}) ou de l'intensité alternative de lampe (I_{L}).

2. Dispositif selon la revendication 1,
caractérisé en ce que
chaque demi durée de période (T_{R11}, T_{R12}; T_{R21}, T_{R22}) est prolongée.

3. Dispositif selon la revendication 1,
caractérisé en ce que
la réduction de puissance est effectuée par une réduction de l'intensité de lampe (IL) du courant nominal (I_{N}) à un niveau d'intensité (I_{R1}, I_{R2}) réduit.

4. Dispositif selon la revendication 1,
caractérisé en ce que
la valeur de l'allongement de la durée de période (T_{R11} + T_{R12}, T_{R21} + T_{R22}) dépend de la valeur de la réduction de puissance.

5. Dispositif selon la revendication 1,
caractérisé en ce que
le circuit d'alimentation en énergie comprend un convertisseur de tension (10) avec une sortie de tension continue et un circuit en pont (12) aval dans la diagonale duquel est disposée la lampe à décharge (13).

6. Dispositif selon la revendication 5,
caractérisé en ce qu'
on prévoit comme source d'énergie (11) une batterie et en ce que le convertisseur de tension (10) est réalisé sous la forme d'un convertisseur courant continu/courant continu.

7. Dispositif selon la revendication 1,
caractérisé en ce qu'
on prévoit comme lampe de décharge (13) une lampe de décharge haute pression à dopage métallique.

8. Dispositif selon la revendication 7,
caractérisé par
l'utilisation dans un véhicule automobile.
